# EUROPEAN PATENT APPLICATION

(11) **EP 3 937 393 A1**
(43) Date of publication of application: **12.01.2022**
(21) Application number: 20782124.0
(22) Date of filing: 30.03.2020
(51) Int. Cl.: H04B 7/06

(54) **TRANSMISSION METHOD AND COMMUNICATION APPARATUS**

(30) Priority: 03.04.2019 CN 201910265662
(71) Applicant: Huawei Technologies Co., Ltd., Longgang Shenzhen, Guangdong 518129 (CN)
(72) Inventor: HAN, Xiao, Shenzhen, Guangdong 518129 (CN); LI, Ling, Chengdu, Sichuan 611756 (CN); DENG, Cailian, Chengdu, Sichuan 611756 (CN); HE, Rong, Chengdu, Sichuan 611756 (CN); LONG, Yan, Chengdu, Sichuan 611756 (CN); FANG, Xuming, Chengdu, Sichuan 611756 (CN)
(74) Representative: Gill Jennings & Every LLP
(86) International application number: PCT/CN2020/082002
(87) International publication number: WO 2020/200150

(57) **Abstract**

This application provides a transmission method, including: generating first indication information, where the first indication information is used to indicate a second communications node to stop information transmission on a first transmission resource, the first transmission resource is a transmission resource shared by a first communications node set and a second communications node set on a first frequency band, any two communications nodes in the first communications node set can communicate with each other, any two communications nodes in the second communications node set can communicate with each other, and the first communications node and the second communications node are any two communications nodes in the first communications node set; and sending the first indication information to the second communications node on a transmission resource corresponding to a second frequency band. When a service period (service period, SP) with poor multiplexing performance is stopped, this method can ensure that information transmission in the SP is not interrupted

## Description

This application claims priority to Chinese Patent Application No. 201910265662.4, filed with the China National Intellectual Property Administration on April 3, 2019, and entitled "TRANSMISSION METHOD AND COMMUNICATIONS APPARATUS", which is incorporated herein by reference in its entirety.

### TECHNICAL FIELD

This application relates to the communications field, and more specifically, to a transmission method and a communications apparatus.

### BACKGROUND

A spatial multiplexing mechanism used in IEEE 802.11ad may allow different service periods (service periods, SPs) of different stations (stations, STAs) near same space to be simultaneously scheduled with relatively small interference. According to an IEEE 802.11ad standard, before spatial multiplexing is performed, a STA needs to measure spatial interference, and feed back a measurement result to a personal basic service set control point/access point (personal basic service set control point/access point, PCP/AP). Then, the PCP/AP determines whether the feedback measurement result meets a spatial multiplexing evaluation criterion. If the spatial multiplexing evaluation criterion is met, spatial multiplexing is arranged to be performed in a corresponding SP in a next beacon interval (beacon interval, BI). If the spatial multiplexing evaluation criterion is not met, spatial multiplexing is not performed.

In a multiplexing process, the STA still needs to measure the spatial interference and report a measurement result to the PCP/AP. If channel quality is lower than an acceptable range, the STA stops the spatial multiplexing.

### SUMMARY

This application provides a transmission method and a communications apparatus, to stop an SP with poor multiplexing performance earlier, and ensure that, when the SP with poor multiplexing performance is stopped, information transmission in the SP is not interrupted.

According to a first aspect, a transmission method is provided. The method is performed by a first communications node, and includes: generating first indication information, where the first indication information is used to indicate a second communications node to stop information transmission on a first transmission resource, the first transmission resource is a transmission resource shared by a first communications node set and a second communications node set on a first frequency band, any two communications nodes in the first communications node set can communicate with each other, any two communications nodes in the second communications node set can communicate with each other, and the first communications node and the second communications node are any two communications nodes in the first communications node set; and sending the first indication information to the second communications node on a transmission resource corresponding to a second frequency band.

Based on the foregoing technical solution, when the first communications node set and the second communications node set share a transmission resource on the first frequency band, one communications node (for example, the first communications node) of two nodes which communicate with each other in one communications node set (for example, the first communications node set) sends the first indication information to another communications node (for example, the second communications node) on the second frequency band. Accordingly, the another communications node receives the first indication information on the second frequency band. In this way, when the information transmission is is stopped, information transmission between the communications nodes is not interrupted on the first frequency band.

In a possible implementation, the first indication information is carried in a first on-channel tunneling OCT frame, the first OCT frame includes a first indication field, and the first indication field is used to indicate that the first indication information is control-type information.

Based on the foregoing technical solution, the first indication information is carried in the first on-channel tunneling OCT frame, so that the first indication information can be transmitted on the second frequency band. In this way, when the shared transmission resource is stopped, information transmission between the communications nodes is not interrupted on the first frequency band.

In addition, the first OCT frame is a management-type frame, and can carry and transmit only a management-type frame. However, the first indication information is control-type information. In this case, for that the first indication information is carried in the first OCT frame, the first indication field is added to the first OCT frame to indicate that the first indication information carried in the first OCT frame is control-type information.

In a possible implementation, the generating first indication information includes: measuring a receiving channel and obtaining a channel measurement result; and generating the first indication information when the channel measurement result indicates that channel quality of the receiving channel does not meet a preset channel quality requirement.

For example, before generating the first indication information, the first communications node may, when the first communications node and the second communications node share the first transmission resource, measure the receiving channel, obtain the channel measurement result, and determine, based on the obtained channel measurement result, whether to stop sharing the first transmission resource with the second communications node set. If the first communications node determines, based on the obtained channel measurement result, to stop sharing the first transmission resource with the second communications node set, the first communications node may generate the first indication information, and send the first indication information to the second communications node.

In a possible implementation, before the generating first indication information, the method further includes: receiving, on the transmission resource corresponding to the second frequency band, a first request message sent by a third communications node, where the first request message is used to request the first communications node to measure the receiving channel; and the measuring a receiving channel and obtaining a channel measurement result includes: measuring the receiving channel according to the first request message and obtaining the channel measurement result.

For example, the first communications node may actively measure the receiving channel. For example, the first communications node may actively measure the receiving channel after starting to share the first transmission resource with the second communications node.

Alternatively, the first communications node may receive, on the transmission resource corresponding to the second frequency band, the first request message sent by the third communications node. The first request message is used to request the first communications node to measure the receiving channel. After receiving the first request message, the first communications node measures the receiving channel according to the first request message and obtains the channel measurement result.

In a possible implementation, the first request message is carried in a second OCT frame.

Based on the foregoing technical solution, the first request message is carried in the second OCT frame, so that the third communications node can transmit the first request message to the first communications node on the second frequency band. In this way, when the third communications node transmits the first request message to the first communications node, information transmission between the first communications node and the second communications node is not interrupted on the first frequency band.

In a possible implementation, the method further includes: sending second indication information to the third communications node on the transmission resource corresponding to the second frequency band. The second indication information is used to indicate the channel measurement result obtained after the first communications node measures the receiving channel.

In a possible implementation, the second indication information is carried in a third OCT frame.

Based on the foregoing technical solution, the second indication information is carried in the third OCT frame, so that the first communications node can transmit the second indication information to the third communications node on the second frequency band. In this way, when the first communications node transmits the second indication information to the third communications node, information transmission between the first communications node and the second communications node is not interrupted on the first frequency band.

According to a second aspect, a transmission method is provided. The method is performed by a second communications node, and includes: generating first indication information, where the first indication information is used to indicate at least one communications node to stop information transmission on a first transmission resource, the first transmission resource is a transmission resource shared by a first communications node set and a second communications node set on a first frequency band, the at least one communications node is any communications node in the first communications node set and the second communications node set, any two communications nodes in the first communications node set can communicate with each other, and any two communications nodes in the second communications node set can communicate with each other; and sending the first indication information to the at least one communications node on a transmission resource corresponding to a second frequency band.

Based on the foregoing technical solution, when the first communications node set and the second communications node set share a transmission resource on the first frequency band, an access point (for example, the third communications node) sends the first indication information on the second frequency band to at least one communications node in the first communications node set and the second communications node set. Accordingly, the at least one communications node receives, on the second frequency band, the first indication information sent by the third communications node. The first indication information is used to indicate the at least one communications node to stop information transmission on the shared transmission resource (for example, the first transmission resource). In this way, when the shared transmission resource is stopped, information transmission between the communications nodes is not interrupted on the first frequency band.

In a possible implementation, the first indication information is carried in a first OCT frame, the first OCT frame includes a first indication field, and the first indication field is used to indicate that the first indication information is control-type information.

Based on the foregoing technical solution, the first indication information is carried in the first on-channel tunneling OCT frame, so that the first indication information can be transmitted on the second frequency band. Accordingly, the at least one communications node receives, on the second frequency band, the first indication information sent by the third communications node. In this way, when the shared transmission resource is stopped, information transmission between the communications nodes is not interrupted on the first frequency band.

In a possible implementation, the generating first indication information includes: receiving, on the transmission resource corresponding to the second frequency band, second indication information sent by the at least one communications node, where the second indication information is used to indicate a channel measurement result obtained after the at least one communications node measures a receiving channel; determining, according to the second indication information, whether channel quality of the receiving channel of the at least one communications node meets a preset channel quality requirement; and generating the first indication information when it is determined that the channel quality of the receiving channel of the at least one communications node does not meet the preset channel quality requirement.

Based on the foregoing technical solution, the third communications node may determine, based on the channel measurement result reported by the at least one communications node, whether to generate the first indication information, and the at least one communications node sends the second indication information to the third communications node on the second frequency band. Accordingly, the third communications node receives, on the second frequency band, the second indication information sent by the at least one communications node. In this way, when the second indication information is transmitted, information transmission between the first communications node set and the second communications node set is not interrupted on the first frequency band.

In a possible implementation, the second indication information is carried in a third OCT frame.

Based on the foregoing technical solution, the second indication information is carried in the third OCT frame, so that the at least one communications node can transmit the second indication information to the third communications node on the second frequency band. In this way, when the at least one communications node transmits the second indication information to the third communications node, information transmission between the first communications node set and the second communications node set is not interrupted on the first frequency band.

In a possible implementation, the method further includes: sending a first request message to the at least one communications node on the transmission resource corresponding to the second frequency band. The first request message is used to request the at least one communications node to measure the receiving channel.

In a possible implementation, the first request message is carried in a second OCT frame.

Based on the foregoing technical solution, the first request message is carried in the second OCT frame, so that the third communications node can transmit the first request message to the at least one communications node on the second frequency band. In this way, when the third communications node transmits the first request message to the at least one communications node, information transmission between the first communications node set and the second communications node set is not interrupted on the first frequency band.

According to a third aspect, a transmission method is provided. The method is performed by a second communications node, and includes: receiving, on a transmission resource corresponding to a second frequency band, first indication information sent by a third communications node or a first communications node, where the first indication information is used to indicate the second communications node to stop information transmission on a first transmission resource, the first transmission resource is a transmission resource shared by a first communications node set and a second communications node set on a first frequency band, any two communications nodes in the first communications node set can communicate with each other, any two communications nodes in the second communications node set can communicate with each other, and the first communications node and the second communications node are any two communications nodes in the first communications node set; and stopping the information transmission on the first transmission resource according to the first indication information.

Based on the foregoing technical solution, when the first communications node set and the second communications node set share a transmission resource on the first frequency band, one communications node (for example, the first communications node) of two nodes which communicate with each other in one communications node set (for example, the first communications node set) sends the first indication information to another communications node (for example, the second communications node) on the second frequency band. Accordingly, the another communications node receives the first indication information on the second frequency band. In this way, when the shared transmission resource is stopped, information transmission between the communications nodes is not interrupted on the first frequency band.

Based on the foregoing technical solution, when the first communications node set and the second communications node set share a transmission resource on the first frequency band, an access point (for example, the third communications node) sends the first indication information on the second frequency band to at least one communications node (for example, the second communications node) in the first communications node set and the second communications node set. Accordingly, the at least one communications node receives, on the second frequency band, the first indication information sent by the third communications node. The first indication information is used to indicate the at least one communications node to stop information transmission on the shared transmission resource (for example, the first transmission resource). In this way, when the shared transmission resource is stopped, information transmission between the communications nodes is not interrupted on the first frequency band.

In a possible implementation, the first indication information is carried in a first OCT frame, the first OCT frame includes a first indication field, and the first indication field is used to indicate that the first indication information is control-type information.

Based on the foregoing technical solution, the first indication information is carried in the first on-channel tunneling OCT frame, so that the first indication information can be transmitted on the second frequency band. In this way, when the shared transmission resource is stopped, information transmission between the communications nodes is not interrupted on the first frequency band.

In addition, the first OCT frame is a management-type frame, and can carry and transmit only a management-type frame. However, the first indication information is control-type information. In this case, for that the first indication information is carried in the first OCT frame, the first indication field is added to the first OCT frame to indicate that the first indication information carried in the first OCT frame is control-type information.

In a possible implementation, the method further includes: receiving, on the transmission resource corresponding to the second frequency band, a first request message sent by the third communications node, where the first request message is used to request the second communications node to measure a receiving channel; and measuring the receiving channel according to the first request message and obtaining a channel measurement result.

In a possible implementation, the first request message is carried in a second OCT frame.

Based on the foregoing technical solution, the first request message is carried in the second OCT frame, so that the third communications node can transmit the first request message to the at least one communications node (for example, the second communications node) on the second frequency band. In this way, when the third communications node transmits the first request message to the at least one communications node, information transmission between the first communications node set and the second communications node set is not interrupted on the first frequency band.

In a possible implementation, the method further includes: sending second indication information to the third communications node on the transmission resource corresponding to the second frequency band. The second indication information is used to indicate the channel measurement result obtained after the second communications node measures the receiving channel.

In a possible implementation, the second indication information is carried in a third OCT frame.

Based on the foregoing technical solution, the second indication information is carried in the third OCT frame, so that the at least one communications node (for example, the second communications node) can transmit the second indication information to the third communications node on the second frequency band. In this way, when the at least one communications node transmits the second indication information to the third communications node, information transmission between the first communications node set and the second communications node set is not interrupted on the first frequency band.

According to a fourth aspect, a communications apparatus is provided. The communications apparatus is configured to perform the methods according to the foregoing aspects or any one of the possible implementations of the foregoing aspects. Specifically, the apparatus includes units configured to perform the methods according to the foregoing aspects or any one of the possible implementations of the foregoing aspects.

According to a fifth aspect, another communications apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control a receiver to receive a signal and control a transmitter to send a signal. When the processor executes the instructions stored in the memory, the processor is enabled to perform the methods according to the foregoing aspects or any one of the possible implementations of the foregoing aspects.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be disposed in different chips. A type of the memory and a manner in which the memory and the processor are disposed are not limited in this embodiment of this application.

According to a sixth aspect, a communications system is provided. The system includes an apparatus configured to implement the method according to the first aspect or any one of the possible implementations of the first aspect, an apparatus configured to implement the method according to the second aspect or any one of the possible implementations of the second aspect, and an apparatus configured to implement the method according to the third aspect or any one of the possible implementations of the third aspect. In one design, the system includes an apparatus configured to implement the method performed by a first communications node, an apparatus configured to implement the method performed by a second communications node, and an apparatus configured to implement the method performed by a third communications node.

According to a seventh aspect, a computer program product is provided. The computer program product includes computer program code, and when the computer program code is run on a computer, the computer is enabled to perform the methods according to the foregoing aspects.

According to an eighth aspect, a computer-readable medium is provided. The computer-readable medium is configured to store a computer program, and the computer program includes instructions used to perform the methods according to the foregoing aspects.

According to a ninth aspect, a chip is provided. The chip includes a processor, configured to invoke and run instructions stored in the memory, and a communications device in which the chip is installed is enabled to perform the methods according to the foregoing aspects.

According to a tenth aspect, another chip is provided. The chip includes an input interface, an output interface, a processor, and a memory. The input interface, the output interface, the processor, and the memory are connected to each other through an internal connection path. The processor is configured to execute code in the memory. When the code is executed, the processor is configured to perform the methods according to the foregoing aspects.

### BRIEF DESCRIPTION OF DRAWINGS

FIG. 1 is a schematic diagram of a structure of a beacon interval according to an embodiment of this application;
FIG. 2 is a schematic diagram of a communications system according to an embodiment of this application;
FIG. 3 is a schematic flowchart of a transmission method according to an embodiment of this application;
FIG. 4 is a schematic diagram of a frame format of an OCT frame and a frame format of a CF-END frame according to an embodiment of this application;
FIG. 5 is a schematic diagram of a frame format of a directional channel quality request frame according to an embodiment of this application;
FIG. 6 is a schematic diagram of a frame format of a directional channel quality report frame according to an embodiment of this application;
FIG. 7 is another schematic flowchart of a transmission method according to an embodiment of this application;
FIG. 8 is another schematic flowchart of a transmission method according to an embodiment of this application;
FIG. 9 is a schematic block diagram of a communications apparatus according to an embodiment of this application; and
FIG. 10 is a schematic block diagram of another communications apparatus according to an embodiment of this application.

### DESCRIPTION OF EMBODIMENTS

The following describes technical solutions of this application with reference to the accompanying drawings.

The technical solutions in the embodiments of this application may be applied to various communications systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communications system, a future 5^{th} generation (5^{th} Generation, 5G) system, or a new radio (New Radio, NR) system.

The technical solutions in the embodiments of this application may be further applied to a wireless local area network (wireless local area network, WLAN), and the embodiments of this application may be applicable to any protocol in the institute of electrical and electronics engineers (institute of electrical and electronics engineers, IEEE) 802.11 series protocols currently used for the WLAN.

The WLAN may include a plurality of communications nodes, for example, one or more personal basic service set control points/access points (personal basic service set control points/access points, PCPs/APs) and one or more stations (stations, STAs).

Specifically, a WLAN is used as an example. The STA may also be referred to as a user unit, an access terminal, a mobile station, a remote station, a remote terminal, a mobile device, a user terminal, a terminal, a wireless communications device, a user agent, a user apparatus, or user equipment (user equipment, UE). The STA may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless local area network (for example, Wi-Fi) communications function, a computing device, or another processing device connected to a wireless modem.

In addition, aspects or features of this application may be implemented as a method, an apparatus or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but are not limited to a radio channel and various other media that can store, include, and/or carry instructions and/or data.

For ease of understanding and description, as an example instead of a limitation, the following describes an execution process and an action of a handover method and apparatus in this application in a WLAN system.

The following first describes related technologies in this application.

### Beacon interval (beacon interval, BI)

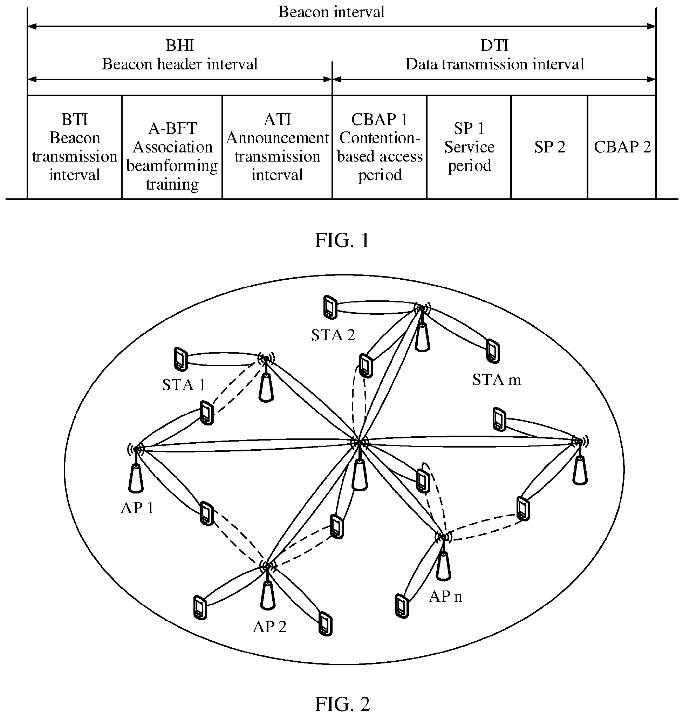

FIG. 1 shows a schematic diagram of a structure of a beacon interval BI. As shown in FIG. 1, a beacon interval is classified into a beacon header interval (beacon header interval, BHI) and a data transmission interval (data transmission interval, DTI). The BHI further includes a beacon transmission interval (beacon transmission interval, BTI), an association beamforming training (association beamforming training, A-BFT) interval, and an announcement transmission interval (announcement transmission interval, ATI).

Specifically, a PCP/AP sends a plurality of beacon (beacon) frames in the BTI based on a sector number. The beacon frames are used for downlink sector sweep. An A-BFT is used by a STA for association and uplink sector sweep. An ATI is used by the PCP/AP to poll the STA for buffered data information and allocate a resource in a data transmission interval (data transmission interval, DTI) to the STA. The entire DTI is divided into several subintervals, and the subintervals are divided into a contention-based access period (contention-based access period, CBAP) and a service period (service period, SP) based on an access manner. In the service period, transmission scheduling is performed without contention.

FIG. 2 shows a schematic diagram of a communications system according to an embodiment of this application. As shown in FIG. 2, the communications system includes a plurality of APs. For the plurality of APs, there are further one or more STAs within coverage of all or some of the APs. Specifically, in the communications system shown in FIG. 2, there are a total of n APs and m STAs in the communications system. Both m and n are integers greater than or equal to 1.

A spatial multiplexing mechanism used in IEEE 802.11ad may allow different service periods (service periods, SPs) of different stations (stations, STAs) near same space to be simultaneously scheduled with relatively small interference. According to an IEEE 802.11ad standard, before spatial multiplexing is performed, a STA needs to measure spatial interference, and feed back a measurement result to a personal basic service set control point/access point (personal basic service set control point/access point, PCP/AP). Then, the PCP/AP determines whether the feedback measurement result meets a spatial multiplexing evaluation criterion. If the spatial multiplexing evaluation criterion is met, spatial multiplexing is arranged to be performed in a corresponding SP in a next beacon interval (beacon interval, BI). If the spatial multiplexing evaluation criterion is not met, spatial multiplexing is not performed.

For example, a station A communicates with a station B in an SP 1 time period, and a station C communicates with a station D in an SP 2 time period. When a PCP/AP determines that spatial multiplexing may be performed on communication between the station C and the station D and communication between the station A and the station B, the PCP/AP may arrange the SP 1 and the SP 2 in a same time period by using a beacon frame sent in a BTI of a next BI or an announce (announce) frame sent in a next ATI. In other words, spatial multiplexing is performed on communication between the station C and the station D and communication between the station A and the station B.

In a multiplexing process, the stations still need to measure the spatial interference and report a measurement result to the PCP/AP. If channel quality is lower than an acceptable range, the stations stop the spatial multiplexing.

However, when the PCP/AP decides to stop spatial multiplexing, an operation that the PCP/AP indicates the STA to stop the spatial multiplexing is performed at a high frequency. If an SP with poor multiplexing performance needs to be stopped in time, data transmission in the SP needs to be interrupted.

In view of this, an embodiment of this application provides a new transmission method, to stop an SP with poor multiplexing performance earlier, and ensure that, when the SP with poor multiplexing performance is stopped, data transmission in the SP is not interrupted.

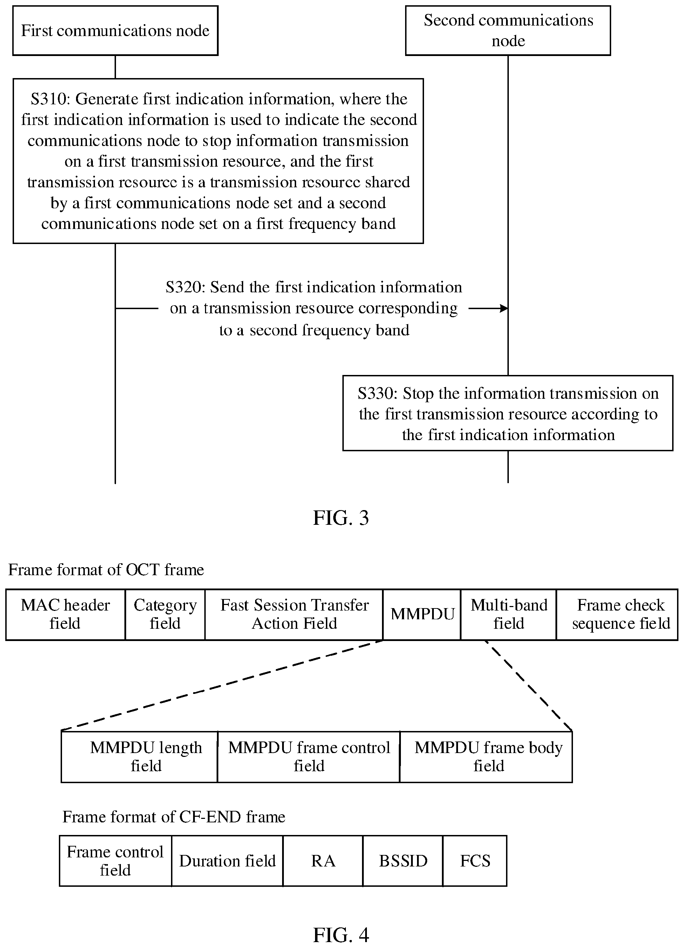

FIG. 3 shows a schematic flowchart of a transmission method 300 according to an embodiment of this application. The method 300 may be used in the communications system 200 shown in FIG. 2. However, this embodiment of this application is not limited thereto.

S310: A first communications node generates first indication information. The first indication information is used to indicate a second communications node to stop information transmission on a first transmission resource. The first transmission resource is a transmission resource shared by a first communications node set and a second communications node set on a first frequency band. Any two communications nodes in the first communications node set can communicate with each other. Any two communications nodes in the second communications node set can communicate with each other. The first communications node and the second communications node are any two communications nodes in the first communications node set.

S320: The first communications node sends the first indication information to the second communications node on a transmission resource corresponding to a second frequency band. Accordingly, the second communications node receives, on the transmission resource corresponding to the second frequency band, the first indication information sent by the first communications node.

S330: The second communications node stops the information transmission on the first transmission resource according to the first indication information.

For example, the first communications node may be a PCP/AP/STA, and the second communications node may be a PCP/AP/STA. When the first communications node is a PCP/AP/STA, the second communications node may be a STA. When the first communications node is a STA, the second communications node may be a PCP/AP/STA.

Specifically, a communications node in the first communications node set and a communications node in the second communications node set share a transmission resource (for example, the first transmission resource) on a frequency band (for example, a first frequency band). The first communications node set includes at least two communications nodes, and the second communications node set includes at least two communications nodes. For example, a same transmission resource is used for communication between two communications nodes (for example, the first communications node and the second communications node) in the first communications node set on the first frequency band (for example, a high frequency band) and communication between two communications nodes in the second communications node set.

If the first communications node determines to stop sharing the first transmission resource with the second communications node set, the first communications node may generate the first indication information. The first indication information is used to indicate the second communications node to stop information transmission on the first transmission resource, that is, the first indication information indicates the second communications node to stop communication with the first communications node on the first transmission resource.

The first communications node may send the first indication information to the second communications node on a transmission resource corresponding to another frequency band (for example, a second frequency band). After receiving the first indication information on the transmission resource corresponding to the second frequency band (for example, a low frequency band), the second communications node may stop information transmission on the first transmission resource according to an indication of the first indication information. For example, after receiving the first indication information, the second communications node stops sending information to the first communications node.

For example, the first indication information is carried in a first on-channel tunneling (on-channel tunneling, OCT) frame, the first OCT frame includes a first indication field, and the first indication field is used to indicate that the first indication information is control-type information.

Specifically, the first communications node may carry the first indication information in the first OCT frame and send the first OCT frame to the second communications node. For example, the first communications node may send, to the second communications node on the transmission resource corresponding to the second frequency band, the first OCT frame that carries the first indication information. The first indication information may be a CF-END frame. A frame format of the CF-END frame and a frame format of the OCT frame are shown in FIG. 4.

The CF-END frame includes a frame control (frame control) field, a duration (duration) field, a receiver address (receiver address, RA) field, a basic service set identifier (basic service set identifier, BSSID) field, and a frame check sequence (frame check sequence) field. The frame control field, the duration field, and the RA field form a media access control (medium access control, MAC) header (header).

The OCT frame includes a MAC header field, a category (category) field, a fast session transfer (fast session transfer, FST) action (action) field, a MAC layer management protocol data unit (MAC layer management protocol data unit, MMPDU) field, a multi-band (multi-band) field, and a frame check sequence (frame check sequence) field. The MMPDU field includes an MMPDU length (length) field, an MMPDU frame control field, and an MMPDU frame body (frame body) field.

The first communications node may encapsulate content of the frame control field of the CF-END frame into the MMPDU frame control field in the MAC layer management protocol data unit (management protocol data unit, MPDU) field, and encapsulate content of the duration field of the CF-END frame into the MMPDU frame body field in the MMPDU field of the first OCT frame.

The first OCT frame is a management-type frame, and can carry and transmit only a management-type frame. However, the CF-END frame is a control-type frame. In this case, to carry the CF-END frame in the first OCT frame and send the first OCT frame to the second communications node, the first communications node cannot directly encapsulate the CF-END frame into the first OCT frame, but needs to modify the first OCT frame, to indicate, to the second communications node, that content in the MMPDU field of the first OCT frame includes the CF-END frame.

In this case, the first communications node may select several bits (for example, the first indication field) from reserved bits (for example, a bit #21 to a bit #125) in a category field of the first OCT frame, and indicate, by using the several bits, that the content in the MMPDU field of the first OCT frame includes the CF-END frame. In this way, the second communications node can obtain the CF-END frame from the first OCT frame based on the first indication field, and stop information transmission on the first transmission resource according to an indication of the CF-END frame.

For example, before generating the first indication information, the first communications node may, when the first communications node and the second communications node share the first transmission resource, measure a receiving channel, obtain a channel measurement result, and determine, based on the obtained channel measurement result, whether to stop sharing the first transmission resource with the second communications node set. If the first communications node determines, based on the obtained channel measurement result, to stop sharing the first transmission resource with the second communications node set, the first communications node may generate the first indication information, and send the first indication information to the second communications node.

For example, the first communications node measures the receiving channel, and obtains the channel measurement result. If the channel measurement result indicates that channel quality of the receiving channel does not meet a preset channel quality requirement, the first communications node may determine that sharing of the first transmission resource with the second communications node set needs to be stopped. In this case, the first communications node may generate the first indication information, and the first indication information is used to indicate the second communications node to stop information transmission on the first transmission resource.

For example, the first communications node may measure a received signal-to-noise indicator (received signal-to-noise indicator, RSNI) of the receiving channel. If the RSNI of the receiving channel measured by the first communications node is less than or equal to a preset RSNI threshold, the first communications node may determine that sharing of the first transmission resource with the second communications node set needs to be stopped.

For example, the first communications node may actively measure the receiving channel. For example, the first communications node may actively measure the receiving channel after starting to share the first transmission resource with the second communications node.

Alternatively, the first communications node may receive, on the transmission resource corresponding to the second frequency band, a first request message sent by a third communications node. The first request message is used to request the first communications node to measure the receiving channel. After receiving the first request message, the first communications node measures the receiving channel according to the first request message and obtains the channel measurement result.

In this case, the method 300 further includes: receiving, on the transmission resource corresponding to the second frequency band, the first request message sent by the third communications node. The first request message is used to request the first communications node to measure the receiving channel. Accordingly, the third communications node sends the first request message on the transmission resource corresponding to the second frequency band. For example, the third communications node may be a PCP/AP beyond the first communications node set and the second communications node set.

Specifically, the third communications node may send the first request message, on the transmission resource corresponding to the second frequency band, to at least one communications node in all communications nodes in the first communications node set and the second communications node set, so that the at least one communications node measures the receiving channel according to the first request message and obtains the channel measurement result.

For example, the first communications node set includes a communications node #1, a communications node #4, and a communications node #6, and the second communications node set includes a communications node #2, a communications node #3, and a communications node #5. The third communications node may send the first request message to at least one communications node of the communications node #1, the communications node #4, the communications node #6, the communications node #2, the communications node #3, and the communications node #5.

For example, the first request message is carried in a second OCT frame.

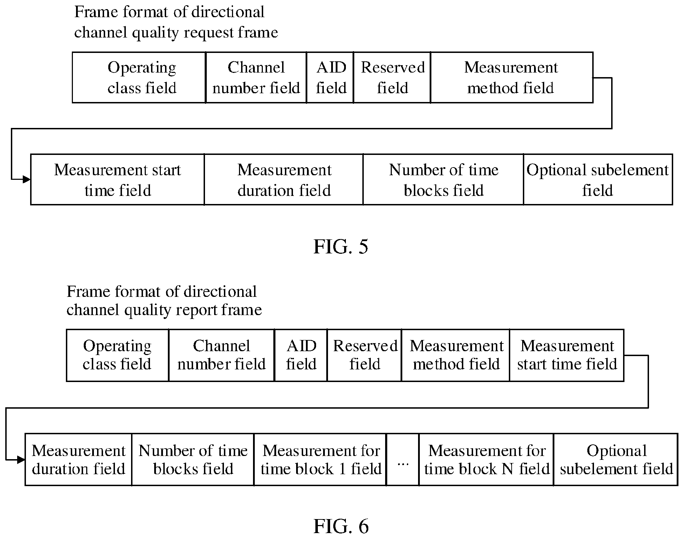

Specifically, the third communications node may carry the first request message in the second OCT frame and send the second OCT frame to the at least one communications node. For example, the third communications node may send, to the at least one communications node on the transmission resource corresponding to the second frequency band, the second OCT frame that carries the first request message. The first request message may include content in a measurement request (measurement request) field of a directional channel quality request (directional channel quality request) frame and content in a frame control field of the directional channel quality request frame. A format of the measurement request field is shown in FIG. 5.

The directional channel quality request frame includes an operating class (operating class) field, a channel number (channel number) field, an association identifier (association identifier, AID) field, a reserved (reserved) field, a measurement method (measurement method) field, a measurement start time (measurement start time) field, a measurement duration (measurement duration) field, a number of time blocks (number of time blocks) field, and an optional subelement (optional subelement) field.

The third communications node may encapsulate the content in the measurement request field into an MMPDU frame body field in an MMPDU field of the second OCT frame, and encapsulate the content of the frame control field of the directional channel quality request frame into an MMPDU frame control field in the MMPDU field of the second OCT frame.

The third communications node may send, to the at least one communications node on the transmission resource corresponding to the second frequency band, the second OCT frame that carries the first request message, so that the at least one communications node (for example, the first communications node) measures the receiving channel according to the first request message and obtains the channel measurement result.

In the embodiment of this application, the method 300 may further include: The first communications node sends second indication information to the third communications node on the transmission resource corresponding to the second frequency band. The second indication information is used to indicate the channel measurement result obtained after the first communications node measures the receiving channel. Accordingly, the third communications node receives, on the transmission resource corresponding to the second frequency band, the second indication information sent by the first communications node.

Specifically, after measuring the receiving channel and obtaining the channel measurement result, the first communications node may further send second indication information to the third communications node. The second indication information is used to indicate the channel measurement result obtained after the first communications node measures the receiving channel.

For example, the second indication information may be carried in a third OCT frame.

Specifically, the first communications node may carry the second indication information in the third OCT frame and send the third OCT frame to the third communications node. For example, the first communications node may send, to the third communications node on the transmission resource corresponding to the second frequency band, the third OCT frame that carries the second indication information. The second indication information may include content in a measurement report (measurement report) field of a directional channel quality report (directional channel quality report) frame and content in a frame control field of the directional channel quality report frame. A format of the measurement report field is shown in FIG. 6.

The directional channel quality report frame includes an operating class field, a channel number (channel number) field, an association identifier (association identifier, AID) field, a reserved (reserved) field, a measurement method (measurement method) field, a measurement start time (measurement start time) field, a measurement duration (measurement duration) field, a number of time blocks (number of time blocks (N)) field, a measurement for time block 1 (measurement for time block 1) field to a measurement for time block N (measurement for time block N) field, and an optional subelement (optional subelement) field.

The first communications node may encapsulate the content in the measurement report field into an MMPDU frame body field in an MMPDU field of the third OCT frame, and encapsulate the content of the frame control field of the directional channel quality report frame into an MMPDU frame control field in the MMPDU field of the third OCT frame.

The first communications node may send, to the third communications node on the transmission resource corresponding to the second frequency band, the second OCT frame that carries the second indication information.

The foregoing solution describes a process in which the first communications node generates the first indication information and sends the first indication information to the second communications node. In this embodiment of this application, the first indication information may alternatively be generated by the third communications node, and the third communications node sends the first indication information to the at least one communications node. In this way, sharing of the transmission resource by the communications nodes in the first communications node set and the second communications node set is stopped.

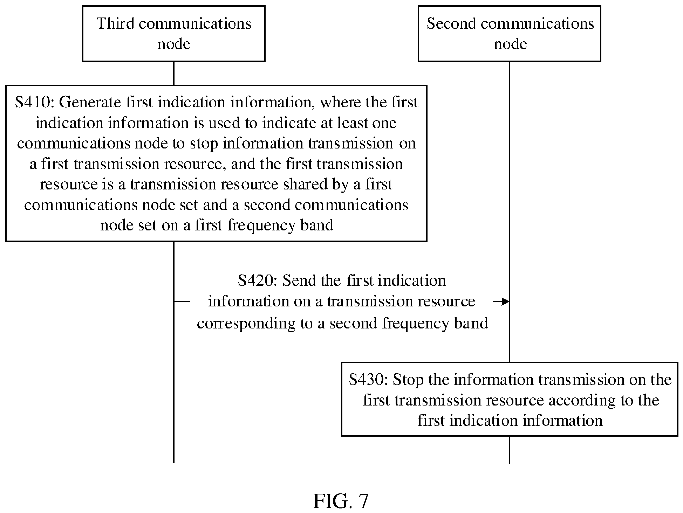

The following describes a transmission method 400 according to an embodiment of this application. FIG. 7 shows a schematic flowchart of the transmission method 400 according to an embodiment of this application. The method 400 may be used in the communications system 200 shown in FIG. 2. However, this embodiment of this application is not limited thereto.

S410: A third communications node generates first indication information. The first indication information is used to indicate at least one communications node to stop information transmission on a first transmission resource. The first transmission resource is a transmission resource shared by a first communications node set and a second communications node set on a first frequency band. The at least one communications node is any communications node in the first communications node set and the second communications node set. Any two communications nodes in the first communications node set can communicate with each other. Any two communications nodes in the second communications node set can communicate with each other.

S420: The third communications node sends the first indication information to the at least one communications node on a transmission resource corresponding to a second frequency band. Accordingly, the at least one communications node receives the first indication information on the transmission resource corresponding to the second frequency band.

S430: The at least one communications node stops the information transmission on the first transmission resource according to the first indication information.

For example, the first communications node may be a PCP/AP/STA, and the second communications node may be a PCP/AP/STA. When the first communications node is a PCP/AP/STA, the second communications node may be a STA. When the first communications node is a STA, the second communications node may be a PCP/AP/STA. The third communications node may be a PCP/AP beyond the first communications node set and the second communications node set. The following describes the method 400 by using an example in which the at least one communications node is a second communications node.

In this embodiment of this application, if a same transmission resource is used for communication between the first communications node and the second communications node on the first frequency band and communication between two communications nodes (for example, a fourth communications node and a fifth communications node) in the second communications node set, the at least one communications node may be at least one of the first communications node, the second communications node, the fourth communications node, and the fifth communications node.

Specifically, a communications node in the first communications node set and a communications node in the second communications node set share a transmission resource (for example, the first transmission resource) on a frequency band (for example, a first frequency band). The first communications node set includes at least two communications nodes, and the second communications node set includes at least two communications nodes. For example, a same transmission resource is used for communication between two communications nodes (for example, the first communications node and the second communications node) in the first communications node set on a first frequency band (for example, a high frequency band) and communication between two communications nodes in the second communications node set communicate with each other.

If the third communications node determines to stop sharing the first transmission resource by the first communications node set and the second communications node set, the third communications node may generate the first indication information. The first indication information is used to indicate the at least one communications node to stop information transmission on the first transmission resource.

The third communications node may send the first indication information to the at least one communications node on a transmission resource corresponding to another frequency band (for example, the second frequency band). After receiving the first indication information on the transmission resource corresponding to the second frequency band (for example, a low frequency band), the at least one communications node may stop information transmission on the first transmission resource according to an indication of the first indication information.

For example, the third communications node may send the first indication information to the first communications node, to indicate the first communications node to stop communication on the first transmission resource with the second communications node. Alternatively, the third communications node may send the first indication information to the second communications node, to indicate the second communications node to stop communication on the first transmission resource with the first communications node. Alternatively, the third communications node may send the first indication information to the fourth communications node, to indicate the fourth communications node to stop communication on the first transmission resource with the fifth communications node. Alternatively, the third communications node may send the first indication information to the fifth communications node, to indicate the fifth communications node to stop communication on the first transmission resource with the fourth communications node. Alternatively, the third communications node may send the first indication information to the first communications node and the second communications node, to indicate to stop communication on the first transmission resource between the first communications node and the second communications node. Alternatively, the third communications node may send the first indication information to the fourth communications node and the fifth communications node, to indicate to stop communication on the first transmission resource between the fourth communications node and the fifth communications node. Alternatively, the third communications node may send first indication information to the first communications node, the second communications node, the fourth communications node, and the fifth communications node, to indicate to stop communication on the first transmission resource between the first communications node and the second communications node, and indicate to stop communication on the first transmission resource with the fourth communications node and the fifth communications node.

For example, the first indication information is carried in a first OCT frame, the first OCT frame includes a first indication field, and the first indication field is used to indicate that the first indication information is control-type information.

Specifically, the third communications node may carry the first indication information in the first OCT frame and send the first OCT frame to the at least one communications node. For example, the third communications node may send, to the at least one communications node on the transmission resource corresponding to the second frequency band, the first OCT frame that carries the first indication information. The first indication information may be a CF-END frame. A frame format of the CF-END frame and a frame format of the OCT frame are shown in FIG. 4.

The third communications node may encapsulate content of the frame control field of the CF-END frame into the MMPDU frame control field in the MMPDU field of the first OCT frame, and encapsulate content of the duration (duration) field of the CF-END frame into the MMPDU frame body field in the MMPDU field of the first OCT frame.

The first OCT frame is a management-type frame, and can carry and transmit only a management-type frame. However, the CF-END frame is a control-type frame. In this case, to carry the CF-END frame in the first OCT frame and send the first OCT frame to the at least one communications node, the third communications node cannot directly encapsulate the CF-END frame into the first OCT frame, but needs to modify the first OCT frame, to indicate, to the at least one communications node, that content in the MMPDU field of the first OCT frame includes the CF-END frame.

In this case, the third communications node may select several bits (for example, the first indication field) from reserved bits (for example, a bit #21 to a bit #125) in a category field of the first OCT frame, and indicate, by using the several bits, that the content in the MMPDU field of the first OCT frame includes the CF-END frame. In this way, the at least one communications node can obtain the CF-END frame from the first OCT frame based on the first indication field, and stop information transmission on the first transmission resource according to an indication of the CF-END frame.

For example, the method 400 may further include: The third communications node receives, on the transmission resource corresponding to the second frequency band, second indication information sent by the at least one communications node, where the second indication information is used to indicate a channel measurement result obtained after the at least one communications node measures a receiving channel; determines, according to the second indication information, whether channel quality of the receiving channel of the at least one communications node meets a preset channel quality requirement; and generates the first indication information when it is determined that the channel quality of the receiving channel of the at least one communications node does not meet the preset channel quality requirement.

For example, the second indication information may be carried in a third OCT frame.

Specifically, the at least one communications node (for example, the second communications node) may carry the second indication information in the third OCT frame and send the third OCT frame to the third communications node. For example, the at least one communications node may send, to the third communications node on the transmission resource corresponding to the second frequency band, the third OCT frame that carries the second indication information. The second indication information may include content in a measurement report (measurement report) field of a directional channel quality report (directional channel quality report) frame and content in a frame control field of the directional channel quality report frame. A format of the measurement report field is shown in FIG. 6.

The at least one communications node may encapsulate the content in the measurement report field into an MMPDU frame body field in an MMPDU field of the third OCT frame, and encapsulate the content of the frame control field of the directional channel quality report frame into an MMPDU frame control field in the MMPDU field of the third OCT frame.

The at least one communications node may send, to the third communications node on the transmission resource corresponding to the second frequency band, the second OCT frame that carries the second indication information. Based on the received second indication information sent by the at least one communications node (for example, the second communications node) in the first communications node set and the second communications node set, the third communications node may determine a channel measurement result of a receiving channel of the at least one communications node. The third communications node may further determine whether channel quality of the receiving channel of the at least one communications node meets a preset channel quality requirement. The third communications node generates the first indication information when it is determined that the channel quality of the receiving channel of the at least one communications node does not meet the preset channel quality requirement.

For example, the channel measurement result of the receiving channel of the at least one communications node may be an RSNI of the receiving channel. If the RSNI of the receiving channel is less than or equal to a preset RSNI threshold, the third communications node may determine that sharing of the first transmission resource by the first communications node set and the second communications node set needs to be stopped.

For example, the at least one communications node may actively measure the receiving channel. For example, the at least one communications node may actively measure the receiving channel after starting to share the first transmission resource with another communications node.

Alternatively, the at least one communications node may receive, on the transmission resource corresponding to the second frequency band, a first request message sent by the third communications node. The first request message is used to request the at least one communications node to measure the receiving channel. After receiving the first request message, the at least one communications node measures the receiving channel according to the first request message and obtains the channel measurement result.

In this case, the method 400 further includes: The third communications node sends the first request message to the at least one communications node on the transmission resource corresponding to the second frequency band. The first request message is used to request the at least one communications node to measure the receiving channel. Accordingly, the at least one communications node receives the first request message on the transmission resource corresponding to the second frequency band.

Specifically, the third communications node may send the first request message to the at least one communications node on the transmission resource corresponding to the second frequency band, so that the at least one communications node measures the receiving channel according to the first request message and obtains the channel measurement result.

For example, the first communications node set includes a communications node #1, a communications node #4, and a communications node #6, and the second communications node set includes a communications node #2, a communications node #3, and a communications node #5. The third communications node may send the first request message to at least one communications node of the communications node #1, the communications node #4, the communications node #6, the communications node #2, the communications node #3, and the communications node #5.

For example, the first request message is carried in a second OCT frame.

Specifically, the third communications node may carry the first request message in the second OCT frame and send the second OCT frame to the at least one communications node. For example, the third communications node may send, to the at least one communications node on the transmission resource corresponding to the second frequency band, the second OCT frame that carries the first request message. The first request message may include content in a measurement request (measurement request) field of a directional channel quality request (directional channel quality request) frame and content in a frame control field of the directional channel quality request frame. A format of the measurement request field is shown in FIG. 5.

The third communications node may encapsulate the content in the measurement request field into an MMPDU frame body field in an MMPDU field of the second OCT frame, and encapsulate the content of the frame control field of the directional channel quality request frame into an MMPDU frame control field in the MMPDU field of the second OCT frame.

The third communications node may send, to the at least one communications node on the transmission resource corresponding to the second frequency band, the second OCT frame that carries the first request message, so that the at least one communications node measures the receiving channel according to the first request message and obtains the channel measurement result.

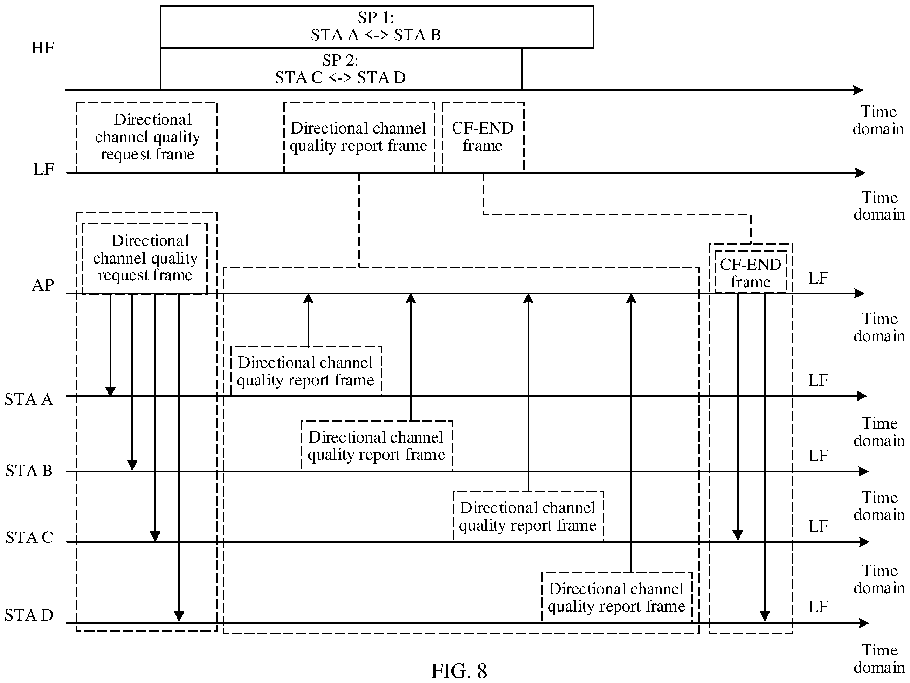

An example is used in which the communications nodes in the first communications node set and the second communications node set are STAs, and the third communications node is an AP. In this example, the AP requests the STAs to measure a receiving channel, the STAs report a channel measurement result to the AP, and the AP indicates, based on the channel measurement result, the STAs in the first communications node set and the second communications node set to stop sharing a resource. With this example, a time sequence process in which the third communications node interacts with the first communications node set and the second communications node set is described with reference to FIG. 8.

As shown in FIG. 8, a STA A and a STA B are STAs in the first communications node set, a STA C and a STA D are STAs in the second communications node set. The STA A and the STA B communicate on a first frequency band (for example, a high frequency (high frequency, HF)), and the STA C and the STA D communicate on the HF. It can be learned that a service period SP 1 of the STA A and the STA B on the HF overlaps a service period SP 2 of the STA C and the STA D on the HF (in other words, a transmission resource used when the STA A and the STA B communicate on the HF and a transmission resource used when the STA C and the STA D communicate on the HF are shared).

It can be learned from FIG. 8 that the AP sends directional quality channel request frames to the STA A, the STA B, the STA C, and the STA D on a second frequency band (for example, a low frequency (low frequency, LF)). Then, the STA A, the STA B, the STA C, and the STA D measure receiving channels and obtain respective channel measurement results, and the STA A, the STA B, the STA C, and the STA D respectively send a directional channel quality report frame to the AP on the LF. The AP determines, based on the directional channel quality report frames reported by the STA A, the STAB, the STAC, and the STAD, whether channel quality of the receiving channels meets a preset channel quality requirement. If the channel quality of the receiving channels does not meet the preset channel quality requirement, the AP may send CF-END frames to the STA C and the STA D, to indicate the STA C and the STA D to stop information transmission between the STA C and the STA D, and stop sharing the resource on the HF between the STA C and the STA D, the STA A, and the STA B.

It should be noted that, for the AP, when the directional channel quality report frame reported by at least one of the STA A, the STA B, the STA C, and the STA D indicates that the channel quality of the receiving channel of the at least one of the STA A, the STA B, the STA C, and the STA D does not meet the preset channel quality requirement, the AP may determine to stop sharing the resource.

It should be further noted that when determining to stop sharing the resource, the AP may send the CF-END frames to the STA C and the STA D, or the AP may send the CF-END frames to the STA A and the STA B. This is not particularly limited in this embodiment of this application.

It should be further noted that for specific methods of sending the directional channel quality request frames, the directional channel quality report frames, and the CF-END frames, refer to related descriptions in the foregoing method 300 and the method 400. For brevity, details are not described herein again.

It should be understood that sequence numbers of the foregoing processes do not indicate an execution sequence. The execution sequence of the processes should be determined based on functions and internal logic of the processes, and should not be construed as any limitation on an implementation process of this embodiment of this application.

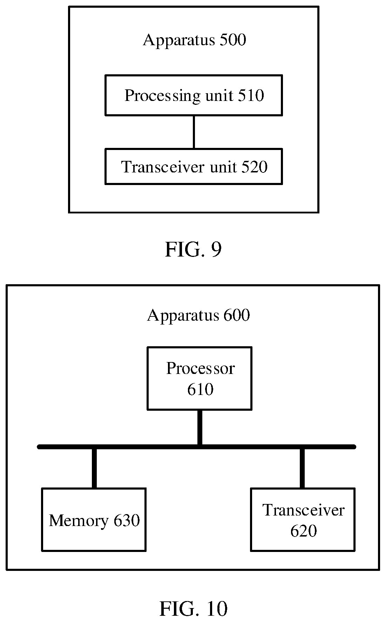

The foregoing describes in detail the transmission method according to the embodiments of this application with reference to FIG. 1 to FIG. 8. The following describes in detail a communications apparatus according to the embodiments of this application with reference to FIG. 9 and FIG. 10.

FIG. 9 shows a communications apparatus 500 provided by an embodiment of this application. The apparatus 500 includes a processing unit 510 and a transceiver unit 520. The transceiver unit 520 may include a sending unit and a receiving unit.

In a possible design, the apparatus 500 is configured to implement the procedures and steps corresponding to the first communications node in the foregoing method embodiments.

The processing unit 510 is configured to: generate first indication information. The first indication information is used to indicate a second communications node to stop information transmission on a first transmission resource. The first transmission resource is a transmission resource shared by a first communications node set and a second communications node set on a first frequency band. Any two communications nodes in the first communications node set can communicate with each other. Any two communications nodes in the second communications node set can communicate with each other. The first communications node and the second communications node are any two communications nodes in the first communications node set. The transceiver unit 520 is configured to: send the first indication information to the second communications node on a transmission resource corresponding to a second frequency band.

Optionally, the first indication information is carried in a first on-channel tunneling OCT frame, the first OCT frame includes a first indication field, and the first indication field is used to indicate that the first indication information is control-type information.

Optionally, the processing unit 510 is further configured to: measure a receiving channel and obtain a channel measurement result; and generate the first indication information when the channel measurement result indicates that channel quality of the receiving channel does not meet a preset channel quality requirement.

Optionally, the transceiver unit 520 is further configured to: receive, on the transmission resource corresponding to the second frequency band, a first request message sent by a third communications node. The first request message is used to request the first communications node to measure the receiving channel.

Optionally, the processing unit 510 is further configured to: measure the receiving channel according to the first request message and obtain the channel measurement result.

Optionally, the first request message is carried in a second OCT frame.

Optionally, the transceiver unit 520 is further configured to: send second indication information to the third communications node on the transmission resource corresponding to the second frequency band. The second indication information is used to indicate the channel measurement result obtained after the first communications node measures the receiving channel.

Optionally, the second indication information is carried in a third OCT frame.

In another possible design, the apparatus 500 is configured to implement the procedures and steps corresponding to the second communications node in the foregoing method embodiments.

The transceiver unit 520 is configured to: receive, on a transmission resource corresponding to a second frequency band, first indication information sent by a third communications node or a first communications node. The first indication information is used to indicate the second communications node to stop information transmission on a first transmission resource. The first transmission resource is a transmission resource shared by a first communications node set and a second communications node set on a first frequency band. Any two communications nodes in the first communications node set can communicate with each other. Any two communications nodes in the second communications node set can communicate with each other. The first communications node and the second communications node are any two communications nodes in the first communications node set. The processing unit 510 is configured to: stop the information transmission on the first transmission resource according to the first indication information.

Optionally, the first indication information is carried in a first OCT frame, the first OCT frame includes a first indication field, and the first indication field is used to indicate that the first indication information is control-type information.

Optionally, the transceiver unit 520 is further configured to: receive, on the transmission resource corresponding to the second frequency band, a first request message sent by a third communications node. The first request message is used to request the second communications node to measure a receiving channel.

Optionally, the processing unit 510 is further configured to: measure the receiving channel according to the first request message and obtain the channel measurement result.

Optionally, the first request message is carried in a second OCT frame.

Optionally, the transceiver unit 520 is further configured to: send second indication information to the third communications node on the transmission resource corresponding to the second frequency band. The second indication information is used to indicate the channel measurement result obtained after the second communications node measures the receiving channel.

Optionally, the second indication information is carried in a third OCT frame.

In another possible design, the apparatus 500 is configured to implement the procedures and steps corresponding to the third communications node in the foregoing method embodiments.

The processing unit 510 is configured to: generate first indication information. The first indication information is used to indicate at least one communications node to stop information transmission on a first transmission resource. The first transmission resource is a transmission resource shared by a first communications node set and a second communications node set on a first frequency band. The at least one communications node is any communications node in the first communications node set and the second communications node set. Any two communications nodes in the first communications node set can communicate with each other. Any two communications nodes in the second communications node set can communicate with each other. The transceiver unit 520 is configured to: send the first indication information to the at least one communications node on a transmission resource corresponding to a second frequency band.

Optionally, the first indication information is carried in a first OCT frame, the first OCT frame includes a first indication field, and the first indication field is used to indicate that the first indication information is control-type information.

Optionally, the processing unit 510 is further configured to: receive, on the transmission resource corresponding to the second frequency band, second indication information sent by the at least one communications node, where the second indication information is used to indicate a channel measurement result obtained after the at least one communications node measures a receiving channel; determine, according to the second indication information, whether channel quality of the receiving channel of the at least one communications node meets a preset channel quality requirement; and generate the first indication information when it is determined that the channel quality of the receiving channel of the at least one communications node does not meet the preset channel quality requirement.

Optionally, the second indication information is carried in a third OCT frame.

Optionally, the transceiver unit 520 is further configured to: send a first request message to the at least one communications node on the transmission resource corresponding to the second frequency band. The first request message is used to request the at least one communications node to measure the receiving channel.

Optionally, the first request message is carried in a second OCT frame.

It should be understood that the apparatus 500 herein is implemented in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs and a memory, a merged logic circuit, and/or another proper component that supports the described functions. In an optional example, a person skilled in the art may understand that the apparatus 500 may be specifically the first communications node, the second communications node, or the third communications node in the foregoing embodiments. The apparatus 500 may be configured to implement the procedures and/or steps corresponding to the first communications node, the second communications node, or the third communications node in the foregoing method embodiments. To avoid repetition, details are not described herein again.

The apparatus 500 in the foregoing solutions has a function for implementing corresponding steps performed by the first communications node, the second communications node, or the third communications node in the foregoing methods. The function may be implemented by hardware, or may be implemented by hardware executing corresponding software. The hardware or the software includes one or more modules corresponding to the foregoing function. For example, the sending unit may be replaced with a transmitter, the receiving unit may be replaced with a receiver, and another unit such as a determining unit may be replaced with a processor, to respectively perform a sending operation, a receiving operation, and a related processing operation in the method embodiments.

In this embodiment of this application, the apparatus in FIG. 9 may be the first communications node, the second communications node, or the third communications node in the foregoing embodiments, or may be a chip or a chip system, for example, a system on chip (system on chip, SoC). Correspondingly, the receiving unit and the sending unit may be a transceiver circuit of the chip. This is not limited herein.

FIG. 10 shows a communications apparatus 600 provided by an embodiment of this application. The apparatus 600 includes a processor 610 and a transceiver 620. The processor 610 and the transceiver 620 communicate with each other through an internal connection path, and the processor 610 is configured to execute instructions, to control the transceiver 620 to send a signal and/or receive a signal.

Optionally, the apparatus 600 may further include a memory 630. The memory 630 communicates with the processor 610 and the transceiver 620 through an internal connection path. The memory 630 is configured to store instructions, and the processor 610 may execute the instructions stored in the memory 630.

In a possible design, the apparatus 600 is configured to implement the procedures and steps corresponding to the first communications node in the foregoing method embodiments.

The processor 610 is configured to: generate first indication information, where the first indication information is used to indicate a second communications node to stop information transmission on a first transmission resource, the first transmission resource is a transmission resource shared by a first communications node set and a second communications node set on a first frequency band, any two communications nodes in the first communications node set can communicate with each other, any two communications nodes in the second communications node set can communicate with each other, and the first communications node and the second communications node are any two communications nodes in the first communications node set; and send the first indication information to the second communications node on a transmission resource corresponding to a second frequency band by using the transceiver 620.

In another possible design, the apparatus 600 is configured to implement the procedures and steps corresponding to the second communications node in the foregoing method embodiments.

The processor 610 is configured to: receive, on a transmission resource corresponding to a second frequency band, first indication information sent by a third communications node or a first communications node by using the transceiver 620. The first indication information is used to indicate the second communications node to stop information transmission on a first transmission resource. The first transmission resource is a transmission resource shared by a first communications node set and a second communications node set on a first frequency band. Any two communications nodes in the first communications node set can communicate with each other. Any two communications nodes in the second communications node set can communicate with each other. The first communications node and the second communications node are any two communications nodes in the first communications node set. The processor 610 is further configured to: stop the information transmission on the first transmission resource according to the first indication information.

In another possible design, the apparatus 600 is configured to implement the procedures and steps corresponding to the third communications node in the foregoing method embodiments.

The processor 610 is configured to: generate first indication information. The first indication information is used to indicate at least one communications node to stop information transmission on a first transmission resource. The first transmission resource is a transmission resource shared by a first communications node set and a second communications node set on a first frequency band. The at least one communications node is any communications node in the first communications node set and the second communications node set. Any two communications nodes in the first communications node set can communicate with each other. Any two communications nodes in the second communications node set can communicate with each other. The processor 610 is configured to: send the first indication information to the at least one communications node on a transmission resource corresponding to a second frequency band by using the transceiver 620.

It should be understood that the apparatus 600 may be specifically the first communications node, the second communications node, or the third communications node in the foregoing embodiments, or may be a chip or a chip system. Correspondingly, the transceiver 620 may be a transceiver circuit of the chip. This is not limited herein. Specifically, the apparatus 600 may be configured to implement the procedures and steps corresponding to the first communications node, the second communications node, or the third communications node in the foregoing method embodiments. Optionally, the memory 630 may include a read-only memory and a random access memory, and provide an instruction and data to the processor. A part of the memory may further include a non-volatile random access memory. For example, the memory may further store information about a device type. The processor 610 may be configured to execute instructions stored in the memory. When the processor 610 executes the instructions stored in the memory, the processor 610 is configured to implement the steps and/or procedures of the method embodiments corresponding to the first communications node, the second communications node, or the third communications node.

It should be understood that in this embodiment of this application, the processor of the foregoing apparatus may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be completed by using a hardware integrated logical circuit in the processor, or by using instructions in a form of software. The steps of the method disclosed with reference to the embodiments of this application may be directly performed by a hardware processor, or may be performed by using a combination of hardware in the processor and a software unit. The software unit may be located in a mature storage medium in the art, such as a random access memory, a flash memory, a read-only memory, a programmable read-only memory, an electrically erasable programmable memory, or a register. The storage medium is located in the memory, and the processor executes the instructions in the memory and completes the steps of the foregoing method in combination with the hardware of the processor. To avoid repetition, details are not described herein again.

In this application, "at least one" refers to one or more, and "a plurality of' refers to two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one (piece) of a, b, or c may indicate the following cases: a, b, c, a and b, a and c, b and c, or a, b, and c, where a, b, and c may be singular or plural.

A person of ordinary skill in the art may be aware that, in combination with the examples described in the embodiments disclosed in this specification, method steps and units can be implemented by electronic hardware, computer software, or a combination thereof. To clearly describe the interchangeability between the hardware and the software, the foregoing has generally described steps and composition of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for ease of convenience and brevity, for a detailed working process of the foregoing system, apparatus, and unit, refer to a corresponding process in the foregoing method embodiments, and details are not repeatedly described herein.

In the several embodiments provided in this application, it should be understood that, the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments of this application.

In addition, function units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in this application essentially, or the part contributing to the prior art, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A transmission method, wherein the method is performed by a first communications node, and comprises:
generating first indication information, wherein the first indication information is used to indicate a second communications node to stop information transmission on a first transmission resource, the first transmission resource is a transmission resource shared by a first communications node set and a second communications node set on a first frequency band, any two communications nodes in the first communications node set can communicate with each other, any two communications nodes in the second communications node set can communicate with each other, and the first communications node and the second communications node are any two communications nodes in the first communications node set; and
sending the first indication information to the second communications node on a transmission resource corresponding to a second frequency band.

2. The method according to claim 1, wherein the first indication information is carried in a first on-channel tunneling OCT frame, the first OCT frame comprises a first indication field, and the first indication field is used to indicate that the first indication information is control-type information.

3. The method according to claim 1 or 2, wherein the generating first indication information comprises:
measuring a receiving channel and obtaining a channel measurement result; and
generating the first indication information when the channel measurement result indicates that channel quality of the receiving channel does not meet a preset channel quality requirement.

4. The method according to claim 3, wherein before the generating first indication information, the method further comprises:
receiving, on the transmission resource corresponding to the second frequency band, a first request message sent by a third communications node, wherein the first request message is used to request the first communications node to measure the receiving channel; and
the measuring a receiving channel and obtaining a channel measurement result, comprising:
measuring the receiving channel according to the first request message and obtaining the channel measurement result.

5. The method according to claim 4, wherein the first request message is carried in a second OCT frame.

6. The method according to any one of claims 3 to 5, wherein the method further comprises:
sending second indication information to the third communications node on the transmission resource corresponding to the second frequency band, wherein the second indication information is used to indicate the channel measurement result obtained after the first communications node measures the receiving channel.

7. The method according to claim 6, wherein the second indication information is carried in a third OCT frame.

8. A transmission method, wherein the method is performed by a third communications node, and comprises:
generating first indication information, wherein the first indication information is used to indicate at least one communications node to stop information transmission on a first transmission resource, the first transmission resource is a transmission resource shared by a first communications node set and a second communications node set on a first frequency band, the at least one communications node is any communications node in the first communications node set and the second communications node set, any two communications nodes in the first communications node set can communicate with each other, and any two communications nodes in the second communications node set can communicate with each other; and
sending the first indication information to the at least one communications node on a transmission resource corresponding to a second frequency band.

9. The method according to claim 8, wherein the first indication information is carried in a first OCT frame, the first OCT frame comprises a first indication field, and the first indication field is used to indicate that the first indication information is control-type information.

10. The method according to claim 8 or 9, wherein the generating first indication information comprises:
receiving, on the transmission resource corresponding to the second frequency band, second indication information sent by the at least one communications node, wherein the second indication information is used to indicate a channel measurement result obtained after the at least one communications node measures a receiving channel;
determining, according to the second indication information, whether channel quality of the receiving channel of the at least one communications node meets a preset channel quality requirement; and
generating the first indication information when it is determined that the channel quality of the receiving channel of the at least one communications node does not meet the preset channel quality requirement.

11. The method according to claim 10, wherein the second indication information is carried in a third OCT frame.

12. The method according to claim 10 or 11, wherein the method further comprises:
sending a first request message to the at least one communications node on the transmission resource corresponding to the second frequency band, wherein the first request message is used to request the at least one communications node to measure the receiving channel.

13. The method according to claim 12, wherein the first request message is carried in a second OCT frame.

14. A transmission method, wherein the method is performed by a second communications node, and comprises:
receiving, on a transmission resource corresponding to a second frequency band, first indication information sent by a third communications node or a first communications node, wherein the first indication information is used to indicate the second communications node to stop information transmission on a first transmission resource, the first transmission resource is a transmission resource shared by a first communications node set and a second communications node set on a first frequency band, any two communications nodes in the first communications node set can communicate with each other, any two communications nodes in the second communications node set can communicate with each other, and the first communications node and the second communications node are any two communications nodes in the first communications node set; and
stopping the information transmission on the first transmission resource according to the first indication information.

15. The method according to claim 14, wherein the first indication information is carried in a first OCT frame, the first OCT frame comprises a first indication field, and the first indication field is used to indicate that the first indication information is control-type information.

16. The method according to claim 14 or 15, wherein the method further comprises:
receiving, on the transmission resource corresponding to the second frequency band, a first request message sent by the third communications node, wherein the first request message is used to request the second communications node to measure a receiving channel; and
measuring the receiving channel according to the first request message and obtaining the channel measurement result.

17. The method according to claim 16, wherein the first request message is carried in a second OCT frame.

18. The method according to claim 16 or 17, wherein the method further comprises:
sending second indication information to the third communications node on the transmission resource corresponding to the second frequency band, wherein the second indication information is used to indicate the channel measurement result obtained after the second communications node measures the receiving channel.

19. The method according to claim 18, wherein the second indication information is carried in a third OCT frame.

20. A communications apparatus, comprising:
a processing unit, configured to generate first indication information, wherein the first indication information is used to indicate a second communications node to stop information transmission on a first transmission resource, the first transmission resource is a transmission resource shared by a first communications node set and a second communications node set on a first frequency band, any two communications nodes in the first communications node set can communicate with each other, any two communications nodes in the second communications node set can communicate with each other, and the first communications node and the second communications node are any two communications nodes in the first communications node set; and
a transceiver unit, configured to send the first indication information to the second communications node on a transmission resource corresponding to a second frequency band.

21. The apparatus according to claim 20, wherein the first indication information is carried in a first on-channel tunneling OCT frame, the first OCT frame comprises a first indication field, and the first indication field is used to indicate that the first indication information is control-type information.

22. The apparatus according to claim 20 or 21, wherein the processing unit is further configured to:
measure a receiving channel and obtain a channel measurement result; and
generate the first indication information when the channel measurement result indicates that channel quality of the receiving channel does not meet a preset channel quality requirement.

23. The apparatus according to claim 22, wherein the transceiver unit is further configured to:
receive, on the transmission resource corresponding to the second frequency band, a first request message sent by a third communications node, wherein the first request message is used to request the first communications node to measure the receiving channel; and
the processing unit is further configured to:
measure the receiving channel according to the first request message and obtain the channel measurement result.

24. The apparatus according to claim 23, wherein the first request message is carried in a second OCT frame.

25. The apparatus according to any one of claims 22 to 24, wherein the transceiver unit is further configured to:
send second indication information to the third communications node on the transmission resource corresponding to the second frequency band, wherein the second indication information is used to indicate the channel measurement result obtained after the first communications node measures the receiving channel.

26. The apparatus according to claim 25, wherein the second indication information is carried in a third OCT frame.

27. A communications apparatus, comprising:
a processing unit, configured to generate first indication information, wherein the first indication information is used to indicate at least one communications node to stop information transmission on a first transmission resource, the first transmission resource is a transmission resource shared by a first communications node set and a second communications node set on a first frequency band, the at least one communications node is any communications node in the first communications node set and the second communications node set, any two communications nodes in the first communications node set can communicate with each other, and any two communications nodes in the second communications node set can communicate with each other; and
a transceiver unit, configured to send the first indication information to the at least one communications node on a transmission resource corresponding to a second frequency band.

28. The apparatus according to claim 27, wherein the first indication information is carried in a first OCT frame, the first OCT frame comprises a first indication field, and the first indication field is used to indicate that the first indication information is control-type information.

29. The apparatus according to claim 27 or 28, wherein the processing unit is further configured to:
receive, on the transmission resource corresponding to the second frequency band, second indication information sent by the at least one communications node, wherein the second indication information is used to indicate a channel measurement result obtained after the at least one communications node measures a receiving channel;
determine, according to the second indication information, whether channel quality of the receiving channel of the at least one communications node meets a preset channel quality requirement; and
generate the first indication information when it is determined that the channel quality of the receiving channel of the at least one communications node does not meet the preset channel quality requirement.

30. The apparatus according to claim 29, wherein the second indication information is carried in a third OCT frame.

31. The apparatus according to claim 29 or 30, wherein the transceiver unit is further configured to:
send a first request message to the at least one communications node on the transmission resource corresponding to the second frequency band, wherein the first request message is used to request the at least one communications node to measure the receiving channel.

32. The apparatus according to claim 31, wherein the first request message is carried in a second OCT frame.

33. A communications apparatus, comprising:
a transceiver unit, configured to receive, on a transmission resource corresponding to a second frequency band, first indication information sent by a third communications node or a first communications node, wherein the first indication information is used to indicate the second communications node to stop information transmission on a first transmission resource, the first transmission resource is a transmission resource shared by a first communications node set and a second communications node set on a first frequency band, any two communications nodes in the first communications node set can communicate with each other, any two communications nodes in the second communications node set can communicate with each other, and the first communications node and the second communications node are any two communications nodes in the first communications node set; and
a processing unit, configured to stop the information transmission on the first transmission resource according to the first indication information.

34. The apparatus according to claim 33, wherein the first indication information is carried in a first OCT frame, the first OCT frame comprises a first indication field, and the first indication field is used to indicate that the first indication information is control-type information.

35. The apparatus according to claim 33 or 34, wherein the transceiver unit is further configured to:
receive, on the transmission resource corresponding to the second frequency band, a first request message sent by the third communications node, wherein the first request message is used to request the second communications node to measure a receiving channel; and
the processing unit is further configured to:
measure the receiving channel according to the first request message and obtain the channel measurement result.

36. The apparatus according to claim 35, wherein the first request message is carried in a second OCT frame.

37. The apparatus according to claim 35 or 36, wherein the transceiver unit is further configured to:
send second indication information to the third communications node on the transmission resource corresponding to the second frequency band, wherein the second indication information is used to indicate the channel measurement result obtained after the second communications node measures the receiving channel.

38. The apparatus according to claim 37, wherein the second indication information is carried in a third OCT frame.
